# EUROPÄISCHE PATENTSCHRIFT

(11) **EP 0 508 301 B1**
(45) Veröffentlichungstag und Bekanntmachung des Hinweises auf die Patenterteilung: **17.11.1994**
(21) Anmeldenummer: 92105644.6
(22) Anmeldetag: 02.04.1992
(51) Int. Cl.: G01J 5/28

(54) **Sensor**
Sensor
Détecteur

(30) Priorität: 06.04.1991 DE 4111135
(43) Veröffentlichungstag der Anmeldung: 14.10.1992
(73) Patentinhaber: DIEHL GMBH & CO., 90478 Nürnberg (DE)
(72) Erfinder: Pleikies, Reinhard, W-8501 Schwaig (DE); Regensburger, Martin, W-8500 Nürnberg (DE); Weissflog, Michael, W-8430 Neumarkt (DE)

(56) Entgegenhaltungen:
- EP-A- 0 158 093
- EP-A- 0 184 747
- EP-A- 0 224 595
- DE-A- 3 318 717
- DE-A- 3 636 422
- DE-A- 3 913 879

## Beschreibung

Die Erfindung betrifft einen Strahlungs-Sensor gemäß dem Oberbegriff des Anspruches 1.

Ein gattungsgemäßer Sensor ist aus der DE-OS 36 36 422 in Form eines aus der Mantelfläche einer Submunition herausschwenkbaren Gehäuses (vgl. US-PS 4 848 235) für einen Infrarot-Detektor bekannt.

Während der vorbekannte Sensor-Aufbau sich für den apparativen Funktionsnachweis bewährt hat, liegt der Erfindung die Aufgabe Zugrunde, einen gattungsgemäßen Sensor dahingehend weiterzubilden, daß er hinsichtlich der Abgleich- und Prüf-Möglichkeiten den Anforderungen einer weitgehend automatisierten Großserien-Fertigung besser entspricht und dennoch einen kompakteren Aufbau ermöglicht, der höchsten mechanischen Beanspruchungen (wie sie etwa bei der Submunitionsverbringung mit einem drallstabiliserten Trägergeschoß auftreten) standhält.

Diese Aufgabe ist erfindungsgemäß im wesentlichen dadurch gelöst, daß der gattungsgemäße Sensor gemäß dem Kennzeichnungsteil des Patentanspruches 1 ausgelegt ist.

Nach dieser Lösung kann einerseits die in sich hermetisch verpackte Hybridschaltung für die Detektorsignal-Vorverarbeitung und andererseits der Detektor selbst mit seiner Anschluß- und Abgleich-Subbaugruppe unmittelbar vor dem Zusammenbau jeweils einzeln geprüft bzw. abgeglichen werden, und der Zusammenbau ergibt dann die rückwärtig in das Sensorgehäuse einsetzbare, hochkompakte Sandwich-Gruppierung, deren elektrische Ausgangsleitungen aus der Zusammenbau-Ebene kommend als biegbares und verwindbares Flachkabel aus dem der Munitionsstruktur gegenüber verschwenkbaren Sensorgehäuse radial austreten und an die weiteren Auswerteschaltungen in der Struktur angeschlossen werden können.

Dabei ergibt die Starrflex-Lösung für die Verbindung der externen Anschlußleitungen zu einerseits dem Hybridschaltkreis und andererseits dem Detektor mit seinen laser-trimmbaren Abgleichwiderständen einen montagefreundlichen Anschluß aus wenigen Bauelementen bei gleichzeitiger Integration der Zugentlastung der das Sensorgehäuse verlassenden Anschlußleitungen. Allerdings kann die Starrflex-Struktur nicht einfach mit den herkömmlichen Epoxyd-Leiterplatten (vgl. DE-PS 33 18 717) realisiert werden, da individuell in SMD-Technologie aufgebrachte Keramikwiderstände dem vollautomatischen Laser-Trimmen aus fertigungstechnischen Gründen, nämlich wegen ungleichmäßiger Plazierung, nicht ohne weiteres zugänglich wären. Problematisch ist auch der geforderte Gleichlauf der Sensorelemente, der nur durch präzise und fein abgestufte Widerstandswerte realisierbar ist; aber lasertrimmbare Metallfilmwiderstände auf Keramiksubstraten weisen eine relativ schlechte Langzeitstabilität auf, jedenfalls verglichen mit im Siebdruck oder der gleichen Masken-Schichttechnologie aufgebrachten Widerständen. Solche fertigungsfreundlicher in Schichttechnologie aufgebrachten Abgleichwiderstände würden aber beim Laser-Trimmen zur Zerstörung der Leiterplatten-Trägerstruktur führen. Deshalb werden nun die Widerstände in Schichttechnologie auf einem eigenen gemeinsamen Keramiksubstrat realisiert, auf dem der Laser-Abgleich möglich ist. Dabei kann dieses Keramiksubstrat zugleich als Isolierstoff-Träger für einen aufgeklebten und dann flexibel herausgeführten Folienleiter dienen, in dem Aussparungen im Bereiche der abzugleichenden Widerstandsschichten vorgesehen sind. So sind die Vorteile der Hybridtechnik, nämlich hohe Stabilität des bedruckten Substrates, verbunden mit den Montagevorteilen herkömmlicher Starrflex-Systeme.

Deren Technologie kann für das Auflaminieren des Folienleiters auf den Keramikträger übernommen werden, so daß diese funktionskritische Verbindungsebene nicht durch herstellungstechnische Risiken belastet wird; wobei ohne Gefahr für die Leiterbahnenstruktur dann in der Folienebene der Laser-Abgleich für die Detektorelement-Vorwiderstände, unmittelbar vor dem koaxialen Sandwich-Zusammenbau mit der Hybridschaltung, erfolgen kann. Ergänzt um die gegenüberliegend im Sensorgehäuse justierte Linse ergibt das einen hoch-automatisierbaren und dadurch preisgünstigen Zusammenbau zu einer auch unter extremen äußeren mechanischen Beanspruchungen noch zuverlässig arbeitenden Sensoreinheit.

Der so in Inline-Anordnung aufgebaute und geprüfte Elektronikmodul braucht lediglich noch von rückwärts in das Sensorgehäuse eingesetzt und dort axial mit Spannschrauben festgelegt zu werden, was von rückwärts, vorteilhafter aber noch vor der Justage der Linse von der Frontseite des Sensorgehäuses her erfolgen kann. Bei entsprechender strahlengeometrischer Auslegung der Sammellinse ist die axiale Lage der Detektorelemente bezüglich eines nicht sehr scharf ausgeprägten Linsen-Brennfleckes nicht kritisch, so daß der Fokusabgleich durch Unterlegen einer Auswahl aus in ihrer Stärke relativ grob gestuften Ausgleichsscheiben als Distanzjustage-Ringen entweder beim rückwärtigen Einsetzen des Detektors oder beim frontseitigen Einsetzen der Linse erfolgen kann. Für den radialen Abgleich der Fokuslage bezüglich der Detektorelemente kann entweder in herkömmlicher Weise für die Aufnahme der vorgeprüften Linse eine Hilfsfassung vorgesehen sein, die der optischen Achse gegenüber justiert wird (wie etwa näher beschrieben im Einleitungsteil der DE-OS 37 30 094; vgl. auch DE-OS 39 13 879); oder die ungefaßte Linse wird längs ihrer großflächigen rückseitigen Auflage-Ringfläche lateral verschoben und dann in der justierten Stellung im Sensorgehäuse verkittet, das damit gleichzeitig als Linsenfassung dient. Die Kittmasse, die den Ringspalt zwischen Linse und Gehäuse ausfüllt, gewährleistet nicht nur eine hohe Langzeit-Positionsstabilität, sondern auch eine flächige radiale Einleitung der bei der Verbringung auftretenden Drallkräfte.

Auch unabhängig vom hier erläuterten Realisierungsbeispiel wird die Kombination eines Keramiksubstrates mit auflaminierten flexiblen Leiterbahnen als eine selbständig schutzfähige Ergänzung zu herkömmlichen Starrflexsystemen für verschiedenste Einsatzbereiche betrachtet.

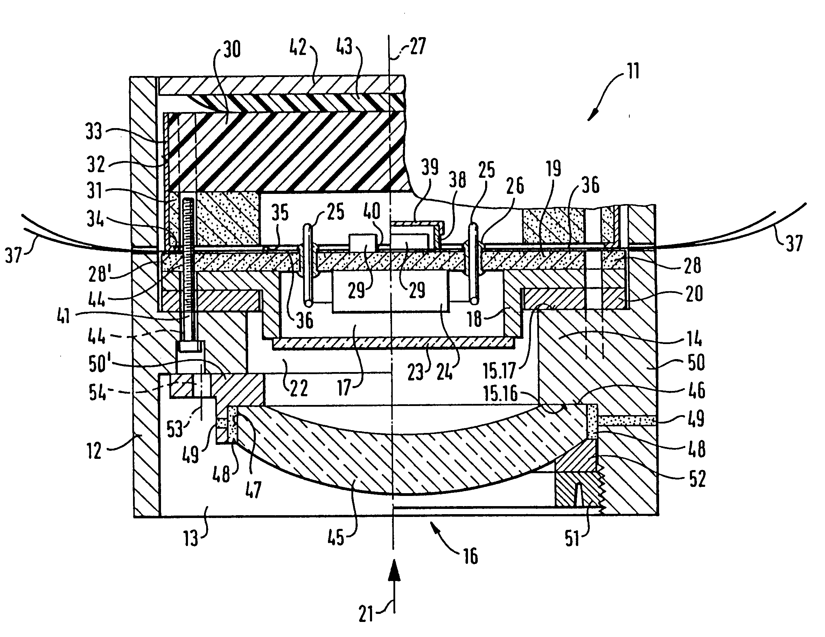

Zusätzliche Alternativen und Weiterbildungen sowie weitere Merkmale und Vorteile der Erfindung ergeben sich aus den abhängigen Ansprüchen und aus nachstehender Beschreibung eines in der Zeichnung unter Beschränkung auf das Wesentliche stark abstrahiert und nicht maßstabsgerecht skizzierten bevorzugten Realisierungsbeispiels zur efindungsgemäßen Lösung. Die einzige Figur der Zeichnung zeigt im Axial-Längsschnitt bei teilweise abgebrochener Darstellung jeweils zwei unterschiedliche Ausführungsbeispiele für die erfindungsgemäße Ausstattung des Strahlensensors vor und hinter seinem Detektor.

Der Sensor 11 weist ein aus hochbeanspruchbarem Metall, wie hochlegiertem Stahl, Titan oder bevorzugt Aluminium F52, bestehendes axial kurzes rohrförmiges Gehäuse 12 auf, dessen Durchgangsbohrung 13 durch eine etwa aus dem Mittenbereich versetzt vorkragend umlaufende Rippe 14 verjüngt ist, um axiale Anlage-Schultern 15 (15.16 und 15.17) für einerseits eine Optik 16 und andererseits einen Detektor 17 zu bilden. Im axial längeren Teil des kurzen rohrförmigen Gehäuses 12 stützt sich der Detektor 17 mit seiner über die Peripherie eines Gehäuses 18 radial vorkragenden Bodenplatte 19, vorzugsweise unter Zwischenlage eines Distanzjustage-Ringes 20, axial nach vorne (der Strahlungs-Einfallrichtung 21 entgegen) gegen die rückwärtige Schulter 15.17 der Rippe 14 ab, so daß das axial vor der Bodenplatte 19 vorragende Detektor-Gehäuse 18 in die durch die umlaufende Rippe 14 gegebene Verjüngung 22 der Gehäuse-Durchgangsbohrung 13 nach vorne hineingreift. Das Detektor-Gehäuse 18 ist frontseitig durch ein Fenster 23 verschlossen, hinter dem auf der Detektor-Bodenplatte 19 ein Array von vorzugsweise thermoelektrisch gekühlten Detektorelementen 24 angeordnet und an Verbindungs-Stifte 25 angeschlossen ist. Diese Stifte 25 sind in mechanisch stabilen Isolierstoff-Halterungen 26 wie Preßglas-Durchführungen in der Detektor-Bodenplatte 19 festgelegt, aus der sie parallel zur Sensor-Achse 27 rückwärts herausstehen. Rückwärtig liegt gegen die Detektor-Bodenplatte 19 ein Isolierstoffträger 28 für den einzelnen Detektorelementen 24 schaltungsmäßig zugeordnete Abgleichwiderstände 29 auf der Rückseite des Trägers 28 an. Eine Hybridschaltung 30 ist mit einer gelochten Abstandsscheibe 31 aus isolierendem Material, vorzugsweise aus Keramik, verbunden, vorzugsweise zur drallfesten Verbindung verklebt. Statt dessen kann diese Scheibe aber auch integraler Bestandteil eines entsprechend geformten Hybridgehäuse-Deckels sein (nicht zeichnerisch ausgeführt). Längs Teilen ihrer Peripherie 32 verlaufen die aus der Hybridschaltung 30 austretenden Anschlüsse 33, deren freien Stirnenden 34 an der Frontseite 35 der Isolierkörper-Scheibe 31 radial nach innen abgewinkelt enden, eine auch als J-Lead bezeichnete Kontaktierungsart. Wenn radial nach außen hinreichend Platz verfügbar ist, werden statt dessen die Anschlüsse vorteilhafter als sogenannte Gull-Wings nach außen gebogen, um die Lötstellen besser inspizieren zu können. Denn die freien Stirnenden 34 dienen der Kontaktierung (Verlötung) mit einem entsprechenden Gegenkontakt-Muster aus Freisparungen oder Kontaktpunkten über Leiterbahnen 36 an der gegenüberliegenden Rückseite des Isolierstoff-Trägers 28, dessen Abgleichwiderstände 29 ebenfalls an diese Leiterbahnen 36 angeschlossen sind. Die Leiterbahnen 36 erstrecken sich radial nach außen über den Träger 28 fort und sind dort als flexibler Mehrader-Folienleiter 37 zum elektrischen Anschluß des Sensors 11 an seine Systemumgebung, insbesondere an die Hülle einer Suchzünder-Submunition aus der das Sensor-Gehäuse 12 achsparallel herausschwenkbar ist, ausgelegt.

Wenn der Isolierstoff-Träger 28 dafür als herkömmliche Starr-Flex-Leiterplatte realisiert ist, also mit auf einen Kunststoff-Träger 28 aufkaschierten Leiterbahnen die sich über den Träger hinaus erstrecken und dort flexibel eingefaßt sind, dann sind die Abgleichwiderstände 29 darauf als Widerstands-Array auf einer Keramikscheibe, etwa der Bodenplatte eines zunächst noch offenen Widerstandsgehäuses 38, angeordnet. Der Boden dieses Gehäuses 38 verhindert, daß beim Laser-Trimmen des Widerstands-Array (also beim Abgleich der Widerstände 29) auch das Trägermaterial beschädigt und dadurch die Struktur der Anschlußleiterbahnen 36 beeinträchtigt wird. Nach erfolgtem Abgleich der Widerstände 29 kann deren Gehäuse 38 durch einen rückwärtig etwa aufgelöteten Deckel 39 hermetisch verschlossen werden.

Ohne einen zusätzlichen Keramikträger in Form des Widerstandsgehäuses 38 kommt man dagegen aus, wenn der Isolierstoff-Träger 28 selbst als dünne Keramikscheibe ausgebildet ist, auf die die zum Folienleiter 37 herausgeführte flexible Leiterbahn 36 auflaminiert ist. Diese trägt Aussparungen 40, durch die hindurch zum Laser-Abgleich die Widerstände 29 zugänglich sind, die in Dickschichttechnik oder in Dünnschichttechnik unmittelbar auf die rückwärtige Oberfläche des Keramik-Trägers 28′ aufgebracht sind. Da diese Beschichtung mit dem Widerstandsmaterial durch einen Maskenprozeß photolithopraphisch erfolgt, sind die Abgleichwiderstände 29 hinsichtlich Orientierung und Abmessung eindeutig bestimmt, so daß deren Koordinaten unmittelbar für den Betrieb eines rechnergesteuerten Laser-Trimmgerätes übernommen werden können; was nicht ohne weiteres möglich wäre, wenn individuelle Abgleichwiderstände 29 in SMD-Technik auf die Rückseite des Keramikträgers 28′ aufgelötet würden.

Für die Montage des vorstehend beschriebenen elektrischen Teiles des Sensors 11 wird der Detektor 17 an den rückwärtigen Stirnenden seiner Anschlußstifte 25 mit den Leiterbahnen 36 des Träger-Laminats verbunden, um den Abgleich der Widerstände 29 für die konkret vorliegenden Detektorelemente 24 unter Abgleichmessung am Anschluß des Folienleiters 37 durchzuführen. Sodann wird die mit der Abstandsscheibe 31 bestückte Hybridschaltung 30, unter Verklebung der Abstandsscheiben-Frontseite 35 mit der laminierten Träger-Rückseite an den abgewinkelten Anschluß-Stirnenden 34, nach Art der SMD-Technologie mit dem geometrisch zugeordneten Muster der Anschlußstellen auf den Leiterbahnen 36 elektrisch und mechanisch verbunden. Dieser schon elektrisch abgeglichene und mechanisch sehr stabile koaxiale Sandwich-Aufbau wird dann unter Zwischenlage des Ringes 20 rückwärts in die Gehäuse-Durchgangsbohrung 13 bis zur Anlage gegen die Schulter 15.17 eingeschoben. Er kann dort durch achsparallele Spannschrauben 41 zwischen einer rückwärtigen Deckscheibe 42, mit frontseitig vorstehender komprimierbarer Ausschäumung 43 zur Toleranzüberbrückung, und der Gehäuse-Rippe 14 axial festgelegt werden. Die Spannschrauben 41 verlaufen dann z.B. von der Deckscheibe 42 unter radialem Spiel durch die Hybridschaltung 30, die Abstandsscheibe 31, den Widerstandsträger 28, die Detektorbodenplatte 19 und den Distanzring 20 hindurch (dort jeweils durch Bohrungen oder seitliche Aussparungen) bis in ein Spanngewinde 44 in der Gehäuse-Innenrippe 14 oder in der Deckscheibe 42 hinein. Grundsätzlich nachteilig ist dabei allerdings, daß der Hybrid 30 mit Durchgangsbohrungen versehen sein müßte, und daß eine relativ dicke Deckscheibe 42 erforderlich wäre, um die Schraubenköpfe versenken zu können. Deshalb ist gemäß der Beispielsdarstellung eine Verschraubung der Detektor-Hybrid-Einheit von der Linsenseite her vorteilhafter, also zu Gewindebohrungen im Detektorboden 19 und gegebenenfalls mit Durchgriff des Schraubenbolzens in die Scheibe 31 als zusätzliche Verdrehsicherung. Dann kann der Schraubenkopf in der Gehäuserippe 14 versenkt werden, die problemlos mit einer abgestuften Durchgangsbohrung auszustatten ist. Eine Festlegung der Deckscheibe 42 kann dann mittels eines kurzen Radialgewindes unter definiertem Anzugdrehmoment erfolgen (nicht zeichnerisch ausgeführt).

Der Ring 20 dient der groben axialen Justage der die Detektorelemente 24 tragenden Bodenplatte 19 bezüglich des Brennpunktes der Optik 16 im vorderen, axial kürzeren Teil des Sensorgehäuses 12. Dort ist eine vorgeprüfte konvex-konkave Sammellinse 45 - für den Fall eines um 4 µm arbeitenden Infrarot-Detektors 17 bestehend aus monokristallinen Silizium - zunächst radial bezüglich der Sensor-Achse 27 verschiebbar angeordnet. Für hohe mechanische Axialbeanspruchbarkeit weist die Linse 45 eine peripher umlaufende rückwärtige, radial relativ große Auflage-Ringfläche 46 auf, die etwa rechtwinklig in eine kurze Zylindermantelfläche 47 übergeht. Längs letzterer ist sie nach der radialen Positionsjustage mit einem dauerfest aushärtenden Kitt 48 eingefaßt, der nach der Linsenjustage über einen dünnen Kanal 49 durch die Linsen-Fassung 50 eingefüllt werden kann. Zur frontseitigen axialen Festlegung der Linse 45 kann ein Haltering 51 unter Zwischenlage eines Gleitringes 52 in ein frontseitiges Innengewinde der Linsenfassung 50 gegen den Seitenrand der Linse 45 angeschraubt sein.

Um eine Handhabung der ungefaßten Linse 45 zur seitlichen Brennpunktjustierung zu vermeiden, kann die Linse 45 aber auch in herkömmlicher Weise in eine Zwischen-Fassung 50′ eingesetzt, etwa wieder spannungsfrei eingekittet sein, die ihrerseits gegen die vordere Rippenschulter 15.16 plan anliegend quer zur optischen Achse 27 justiert wird, ehe sie durch Flanschbohrungen 53 hindurch mit der Gehäuse-Innenrippe 14 verschraubt und damit endgültig aber reversibel positioniert wird. Entgegen der vereinfachten zeichnerischen Darstellung liegen die ebenfalls achsparallelen Verschraubungen 54 für die frontseitige Festlegung der Linsenfassung 50′ allerdings zweckmäßigerweise nicht in der gleichen Querschnittsebene wie die Spannschrauben 41, um hinreichend große Bohrungen in der Rippe 14 zu ermöglichen.

## Patentansprüche

1. Strahlungs-Sensor (11), mit einem kurzen rohrförmigen Gehäuse (12), das aus einer Struktur herausschwenkbar ist, mit einer Optik (16) und einem koaxial hinter dieser angeordneten Elektronikblock in Sandwich-Anordnung mit einem mehrelementigen Detektor (17) vor einer Hybridschaltung (30), zwischen denen ein Träger (28) mit Leiterbahnen (36) angeordnet ist, an welche die Detektorelemente (24) sowie. denen gegenüber, deren, ehe die Anschlüsse (33) der Hybridschaltung (30) an den Leiterbahnen (36) des Trägers (28) festgelegt sind, laser-trimmbare Abgleichwiderstände (29) angeschlossen sind,
**dadurch gekennzeichnet,**
daß auf dem Träger (28), dem Detektor (17) gegenüber, flexible Leiterbahnen (36) flächig festgelegt sind, die sich radial nach außen über den Träger (28) fort als flexibler zugentlasteter Folienleiter (37) zum Anschluß des Sensors (11) an die benachbarte Struktur erstrecken, und daß die Abgleichwiderstände (29) in Schichttechnik auf einem Keramiksubstrat realisiert und trimmbar sind, bei dem es sich um den Träger (28) selbst, mit Zugänglichkeit der Abgleichwiderstände (29) durch Aussparungen (40) in den Leiterbahnen (36) hindurch, oder um den Boden eines Gehäuses (38) für ein Widerstands-Array handelt.

2. Sensor nach Anspruch 1, dadurch gekennzeichnet,
daß ein Keramik-Element mit den Abgleichwiderständen (29) auf die Leiterbahnen (36) eines Kunststoff-Trägers (28) aufgesetzt ist.

3. Sensor nach Anspruch 1 oder 2, dadurch gekennzeichnet,
daß die Hybridschaltung (30) und der Leiterbahnen-Träger (28) unter Zwischenlage einer Lochscheibe (31) miteinander verklebbar sind, wobei die Anschlüsse (33) der Hybridschaltung (30) die Lochscheibe (31) am Rande umgreifen und zu SMD-Verbindungen eines entsprechenden geometrischen Anschluß-Musters an den Leiterbahnen (36) auf dem Träger (28) führen.

4. Sensor nach einem der vorangehenden Ansprüche,
dadurch gekennzeichnet,
daß der Detektor (17) rückwärtig und die Optik (16) frontseitig gegen eine umlaufende Rippe (14) in der Gehäuse-Bohrung (13) anliegen, unter axialem Fokusabgleich durch Zwischenlage wenigstens eines Distanzringes (20).

5. Sensor nach einem der vorangehenden Ansprüche,
dadurch gekennzeichnet,
daß die Linse (45) der Optik (16) durch laterale Verschiebung in ihrer Fassung (50) oder mit einer Fassung (50′) längs der vorderen Rippen-Schulter (15) radial justierbar ist.

6. Sensor nach einem der vorangehenden Ansprüche,
dadurch gekennzeichnet,
daß die Optik (16) mit justierter Linse (45) und/oder der abgeglichene und zusammengebaute Elektronikblock achsparallel an der in der Gehäusebohrung (13) umlaufenden Rippe (14) verschraubt sind.

## Claims

1. Radiation sensor (11), with a short tubular casing (12), which may be swivelled out of a structure, with an optical element (16) and an electronics block arranged coaxially behind this in a sandwich arrangement with a multiple element detector (17) in front of a hybrid circuit (30), between which a support (28) with conductor strips (36) is arranged, on which the detector elements (24) and, opposite these, their laser-trimmed balancing resistances (29) are connected, before the connections (33) of the hybrid circuit (30) are fixed to the conductor strips (36) of the support (28), characterised in that flexible conductor strips (36) are fixed over their surface on the support (28) and opposite the detector (17), said conductor strips (36) extending radially outwards beyond the support (28) in the form of flexible non-tensioned foil conductors (37) for connection of the sensor (11) to the adjacent structure, and that the balancing resistances (29) are laminated on a ceramic substrate and may be trimmed, this relating to the support (28) itself with access for the balancing resistances (29) through recesses (40) in the conductor strips (36), or relating to the base of a casing (38) for a resistance array.

2. Sensor according to Claim 1, characterised in that a ceramic element is placed with the balancing resistances (29) on the conductor strips (36) of a plastic support (28).

3. Sensor according to Claim 1 or 2, characterised in that the hybrid circuit (30) and the conductor strip support (28) may be glued to one another with a perforated disc (31) placed between them, in which case the connections (33) of the hybrid circuit (30) enclose the perforated disc (31) at its edges and form SMD connections of a corresponding geometric connection pattern at the conductor strips (36) on the support (28).

4. Sensor according to one of the preceding claims, characterised in that the detector (17) abuts at the rear and the optical element (16) at the front against a circumferential rib (14) in the casing cavity (13), axially balancing the focus by placing at least one spacer ring (20) between them.

5. Sensor according to one of the preceding claims, characterised in that the lens (45) of the optical element (16) may be radially adjusted by lateral displacement in its socket (50) or with a socket (50′) along the front rib shoulder (15).

6. Sensor according to one of the preceding claims, characterised in that the optical element (16) with an adjustable lens (45) and/or the balanced and assembled electronics block are screw-connected axis-parallel to the circumferential rib (14) in the casing cavity (13).

## Revendications

1. Capteur de rayonnement (11), comportant un boîtier (12) tubulaire, court, qui peut être pivoté à l'extérieur d'une structure, comportant un système optique (16) et un bloc électronique, placé coaxialement derrière celui-ci, en construction sandwich, avec un détecteur (17) à plusieurs éléments devant un circuit hybride (30), entre lesquels est prévu un support (18) avec bandes de conducteur (36), auxquelles sont raccordés les éléments de détecteur (24) ainsi que, grâce a ceux-ci, leurs résistances de compensation (29) à compenser par laser, avant que les connexions (33) du circuit hybride (30) ne soient fixées sur les bandes de conducteur (36) du support (28), caractérisé en ce que sur le support (28), face aux détecteurs (17), sont fixés à plat des bandes de conducteur (36) flexibles qui s'étendent radialement vers l'extérieur, au-delà du support (28), sous la forme de conducteurs en feuille (37) flexibles, déchargés en traction, pour le branchement du capteur (11) à la structure voisine et en ce que les résistances de compensation (29) sont réalisées par la technique des couches sur un substrat de céramique et peuvent être compensés, ce substrat étant le support (28) lui-même, avec accès aux résistances de compensation (29) par les découpes (40) pratiquées dans les bandes de conducteur (36), ou le fond d'un boîtier (38) pour un ensemble de résistances.

2. Capteur selon la revendication 1, caractérisé en ce qu'un élément céramique avec les résistances de compensation (29) est placé sur les bandes de conducteur (36) d'un support (28) en matière plastique.

3. Capteur selon les revendications 1 ou 2, caractérisé en ce que le circuit hybride (30) et le support (28) des bandes de conducteur peuvent être collés entre eux, par insertion d'un disque perforé (31), les connexions (33) du circuit hybride (30) entourant le bord du disque perforé (31) et menant à des liaisons SMD d'un modèle de branchement géométrique correspondant sur les bandes de conducteur (36), sur le support (28).

4. Capteur selon l'une des revendications précédentes, caractérisé en ce que le détecteur (17) s'applique à l'arrière et le système optique (16) à l'avant contre une nervure (14) périphérique, dans le perçage (13) du boîtier, avec compensation focale axiale par insertion d'au moins une bague d'écartement (20).

5. Capteur selon l'une des revendications précédentes, caractérisé en ce que la lentille (45) du système optique (16) peut être ajustée radialement par déplacement latéral dans sa monture (50) ou avec une monture (50′) le long de l'épaulement (15) avant de la nervure.

6. Capteur selon l'une des revendications précédentes, caractérisé en ce que le système optique (16) avec lentille (45) ajustée et/ou le bloc électronique compensé et assemblé sont vissés, avec leurs axes parallèles, sur la nervure (14) périphérique dans le perçage (13) du boîtier.
